(19)

Europäisches
Patentamt
European
Patent Office
Office européen
des brevets

(11) **EP 1 816 469 A1**

(12) **EUROPEAN PATENT APPLICATION**

(43) Date of publication:
 **08.08.2007 Bulletin 2007/32**

(51) Int Cl.:
 *G01N 23/20* (2006.01) *G01N 23/207* (2006.01)

(21) Application number: **06002491.6**

(22) Date of filing: **07.02.2006**

(84) Designated Contracting States:
 **AT BE BG CH CY CZ DE DK EE ES FI FR GB GR
 HU IE IS IT LI LT LU LV MC NL PL PT RO SE SI
 SK TR**
 Designated Extension States:
 **AL BA HR MK YU**

(71) Applicant: **EMBL
 D-69117 Heidelberg (DE)**

(72) Inventor: **Ravelli, Raimond
 38000 Grenoble (FR)**

(74) Representative: **Reitstötter - Kinzebach
 Patentanwälte,
 Sternwartstrasse 4
 81679 München (DE)**

(54) **Methods based on UV radiation-induced changes in a crystal of a compound and device for determining a three-dimensional structure of such compound**

(57)    The present invention relates to the use of ultra-violet (UV) radiation in crystallography. More specifically, the present invention relates to a method of inducing specific changes in a crystal of a compound, a method of generating X-ray diffraction data from a compound, and a method of determining a three-dimensional structure of a compound. Said methods are based on UV radiation induced changes in the crystal structure of a compound, which allow to obtain phase information from X-ray diffraction data collected from said crystal and thus to solve the three-dimensional structure of the compound. Furthermore, the present invention relates to a device for determining a three-dimensional structure of a compound comprising an X-ray diffractometer and a UV radiation source. Moreover, the present invention relates to the use of a UV radiation source.

**Description**

The present invention relates to X-ray crystallography. More specifically, the present invention relates to a method of inducing specific changes in a crystal of a compound, a method of generating X-ray diffraction data from a compound, and a method of determining a three-dimensional structure of a compound. Furthermore, the present invention relates to a device for determining a three-dimensional structure of a compound comprising an X-ray diffractometer with an X-ray source from which X-rays are guided to a crystal location and with a detector for detecting diffracted X-rays. Moreover, the present invention relates to the use of a UV radiation source.

X-ray crystallography is a powerful technique to determine structures on an atomic detail ($1\,\text{Å} = 10^{-10}\,\text{m}$) both of small and macromolecular compounds. To this end, X-rays from an X-ray source are guided to a crystal of the compound and the X-rays diffracted from the crystal are then received by an X-ray detector. X-ray diffractometers suitable for X-ray crystallography are well known. To determine the structure, the atomic models are fitted in an iterative way in a 3-dimensional electron density. This density is calculated using a Fourier transform of so-called structure factors $F_{hkl}$. The amplitudes of $F_{hkl}$, $|F_{hkl}|$, are directly derivable from the integrated intensities from all possible diffracted beams hkl. The phases of $F_{hkl}$, $\varphi_{hkl}$, however, cannot be measured directly. This is the well known 'phase problem' in crystallography.

In contrast to small-molecule crystallography, no mathematical procedure exists to solve the phase problem *ab initio* for crystals of macromolecules that diffract to less than atomic resolution. The structure determination of novel macromolecular compounds that are not highly homologous to known compounds relies on the accurate measurement of two or more sets of reflections from isomorphous crystals, where the scattering power of a small number of atoms is different for each set. These atoms are often artificially introduced in the macromolecular structure, with selenomethionine derivatisation being the most commonly used technique. In isomorphous replacement techniques (SIR: single isomorphous replacement, MIR: multiple isomorphous replacement) multiple data sets are collected from crystals with and without heavy atoms (HA). For anomalous dispersion techniques (SAD: single-wavelength anomalous dispersion, MAD: multiple-wavelength anomalous dispersion) the data are split into sets of equal wavelength and Friedel sign.

A general method that could overcome the need of heavy-atom derivatisation would hold great promise for the growing number of structural biologists who are using macromolecular crystallography; such a method would safe on labour, synchrotron time, toxic heavy atom solutions, and costs. Interesting concepts like brute-force molecular replacement, iterated projections, free energy minimization or three-beam X-ray diffraction remain in rather early stages of development. In contrast, the use of weak anomalous scatterers within native proteins, sometimes enhanced by naturally bound heavy atoms, holds great promise as a generally useful method. Small anomalous differences for sulphur and phosphorous can be accurately measured at an appropriate wavelength of the X-ray beam. Sulphur is present in almost all proteins, and phosphorous is present in all oligonucleotides. The K absorption edges of these elements are found at very long wavelengths, at 5.0 and 5.8 Å respectively, but the huge absorption by the crystal, air and beamline components at these wavelengths make it technically extremely challenging to collect useful data at these edges. Pioneering work on crambin demonstrated that reliable phase information can be obtained using the anomalous signal for sulphur collected with X-ray energies far above the K absorption edge. The remote-edge sulphur single-wavelength anomalous dispersion (S-SAD), has seen a revival over the last few years, resulting in a constant pushing of the limits of this method. However, full maturation of S-SAD seems to be hampered by, among other issues, radiation damage.

Radiation damage is a serious problem in the phasing of macromolecular crystal structures, even for cryo-cooled crystals. Systematic studies on 3rd generation synchrotron undulator beamlines have shown that upon exposure of the crystal to the X-ray beam, both general and highly specific changes occur. The diffractive power of the crystal gradually detoriates, resulting in increased Wilson B-factors. Concomitantly, the mosaicity tends to increase with dose as well as the unit cell volume. Well-known markers of specific damage are disulfide breakage, loss of definition of carboxyl groups and damage to strained active sites. Changes occurring with sulfur atoms are particularly detrimental while performing an S-SAD experiment. Phasing programs traditionally assume the anomalous scatterer to remain unaltered throughout the data collection, both in terms of position and occupancy. This assumption is only valid as long as the error caused by radiation damage remains smaller than all other experimental errors.

The use of radiation damage for phasing, called radiation-damage induced phasing (RIP), was initially shown in the absence of anomalous scattering [Ravelli, R. B., Leiros, H. K., Pan, B., Caffrea, M. & McSweeney, S. (2003) Structure (Camb) 11, 217-224; incorporated herein by reference] and represents another method for obtaining phases from unmodified protein. Now, several examples are known where radiation damage, often in combination with anomalous scattering (RIPAS: [Zwart, P.H., Banumathi, S., Dauter, M. & Dauter, Z. (2004) Acta Crystallographica Section D 60, 1958-1963; incorporated herein by reference]) provide useful phase information [Ravelli, R.B.G., Nanao, M. H., Lovering, A., White, S. & McSweeney, S. (2005) Journal of Synchrotron Radiation 12, 276-284; incorporated herein by reference]. Two experimental methods for using radiation damage to obtain phases currently exist. In the first method, two low dose datasets (the 'before' and 'after' datasets) are interleaved with a high dose X-ray exposure (the 'burn') which induces specific radiation damage. The differences between the two low dose data sets are then used in a pseudo-SIR manner to both determine the radiation damaged substructure and obtain phases. The second method exploits the radiation damage accumulated during the course of a 'normal' data collection.

Future generation phasing programs are likely to be able to use unmerged data sets both for the determination and the refinement of the substructure. The unmerged data sets would contain dose information as well as exposure mode (beam shape, beam and crystal size) and the substructure positions and occupancies would be a function of dose. These developments will be stimulated by the ever increasing amount of SAD and MAD data collected on 3rd generation undulator beamlines. The concepts needed to deal with radiation-damage compromised SAD and MAD data are the same as those for RIP data, and thus the latter technique is expected to greatly benefit from ongoing developments.

Recently, it has been shown how two methods, substructure iteration and downscaling, provide important benefits for the RIP method [Nanao, M. H., Sheldrick, G. M. & Ravelli, R. B. (2005) Acta Crystallogr D Biol. Crystallogr 61, 1227-1237; incorporated herein by reference]. Briefly, 'iteration' refers to the stepwise improvement of a partial RIP substructure to eventually include the complete substructure with both positive and negatively occupied positions. 'Downscaling' refers to obtaining better RIP substructures by down-weighting (K < 1) the radiation-damaged data set ('after') while calculating $F_{before}$-$KF$ *after* difference Fouriers. Six model proteins, all containing disulphide bonds were investigated. Two structures were solved readily, whereas downscaling was mandatory in order to solve three of the proteins. The latter category included hen egg white lysozyme (HEWL), for which it was especially difficult to find an initial substructure complete enough to allow subsequent phasing. For one protein, ribonuclease A (RNAse), no correct initial substructure could be found at all. The most susceptible sites for this protein consisted of carboxyl groups as well as waters located close to the surface of the protein. Unexpectedly, the disulphides in ribonuclease A were less susceptible.

The success of the RIP method depends on the contrast between the susceptibility of different sites to X-rays. Some chemical bonds, such as Br-C in brominated nucleotides or Hg-S bonds in mercurated proteins, are highly sensitive to cleavage by the X-ray beam, which facilitates the RIP method. Also, disulphides are sensitive to X-ray cleavage. However, X-ray radiation damage can also lead to a large number of further changes such as the decarboxylation of Asp, Glu or the C-terminus of a protein. Thus, the RIP method suffers from the fact that X-rays introduce a large number of rather unspecific changes, which can be difficult to find, model and refine.

Thus, there is still a need for a further method to overcome the 'phase problem' in macromolecular crystallography. The method should be less cumbersome, time-consuming and expensive than derivaterizing the sample. The method should allow the phasing of native macromolecular compounds.

It has now surprisingly been found that the exposure to UV radiation provides a new method of obtaining phase information from X-ray data collected on crystals of macromolecular compounds. The methods of the present invention are based on UV radiation-induced changes in the crystal structure of a compound, which allow to obtain phase information from X-ray diffraction data collected from said crystal and thus to solve the three-dimensional structure of the compound.

The present invention thus relates to a method of inducing at least one change in a crystal of a compound, which comprises providing the crystal and exposing the crystal to UV radiation. Accordingly, the present invention relates to the use of UV radiation for inducing changes in a crystal of a compound.

The present invention further relates to a method of generating X-ray diffraction data from a compound, which method comprises providing a crystal of the compound, collecting a first set of X-ray diffraction data from the crystal, exposing the crystal or a further crystal of the compound to UV radiation, and collecting a second set of X-ray diffraction data from the crystal or the further crystal. Accordingly, the present invention relates to the use of UV radiation for generating X-ray diffraction data of a compound, which data comprises a first and a second set of X-ray diffraction data, the second set of X-ray diffraction data being obtained from a crystal exposed to UV radiation.

The differences between the first and the second set of X-ray diffraction data allow to derive phase information that can be used to determine the three-dimensional structure of the crystallized compound.

Thus, the present invention relates to a method of determining a three-dimensional structure of a compound, which method comprises providing a crystal of the compound, collecting a first set of X-ray diffraction data from the crystal, exposing the crystal or a further crystal of the compound to UV radiation, collecting a second set of X-ray diffraction data from the crystal or the further crystal, and determining the three-dimensional structure from the first and second set of X-ray diffraction data.

The invention is based on the finding that exposing a crystal of a compound, especially a macromolecular compound, to UV radiation induces specific structural changes. Using an UV laser of 266 nm some specific bonds show an enhanced susceptibility, with a low background of general damage. In contrast to X-rays which always cause a large degree of non-specific damage [Ravelli R. B. and McSweeney S. M. (2000), Structure Fold Des 8, 315- 318; incorporated herein by reference], UV radiation thus appears to be more chirurgical in inducing specific structural changes in the protein. The effects of UV radiation on proteins and oligonucleotides are well known to be detrimental. DNA damage by UV is well studied, and possible reactions include deamination of cytosine and pyrimidine dimer formations.

According to one embodiment of the present invention the first set of X-ray diffraction data and the second set of X-ray diffraction data is collected from the same crystal. Accordingly, the methods of the present invention comprise providing a crystal of the compound, collecting a first set of X-ray diffraction data from the crystal, exposing the crystal to UV radiation, and collecting a second set of X-ray diffraction data from the crystal.

According to a further aspect of the present invention, said embodiment includes collecting the first and second set of X-ray diffraction data from the same part of the crystal or from different parts of the crystal. If the data are collected from different parts of the crystal the methods of the present invention thus comprise providing a crystal of the compound, collecting a first set of X-ray diffraction data from a first part of the crystal, exposing a second part of the crystal to UV radiation, and collecting a second set of X-ray diffraction data from the second part of the crystal. In this case it is expedient that the first part of the crystal and the second part comprise spatially distinct space elements within the crystal. Preferably, the first part of the crystal and the second part of the crystal are spatially distinct, which means that they do not have any space element within the crystal in common. Expediently, the first part of the crystal and the second part of the crystal are isomorphous.

According to a further embodiment of the present invention, the first set of X-ray diffraction data and the second set of X-ray diffraction is collected from different crystals. Accordingly, the methods of the present invention comprise providing a first crystal of the compound, collecting a first set of X-ray diffraction data from the first crystal, providing a second crystal of the compound, exposing the second crystal to UV radiation, and collecting a second set of X-ray diffraction data from the second crystal. Expediently, the first crystal and the second crystal are isomorphous.

The UV radiation-induced changes can be used to phase the structure in a way analogous to the Isomorphous Replacement (e.g. SIR) method.

Thus, for the purpose of radiation-induced phasing, the use of UV radiation is advantageous over the use of X-rays. In additon to a larger contrast between radiation susceptible and non-susceptible sites, a further advantage of the methods of the invention is that the overall quality of the crystal can be better preserved during the exposure to UV radiation than to X-rays.

Also, it is an advantage of the methods of the invention that all data can be obtained from one, native, crystal; no derivatives need to be made. The methods of the invention are of general interest to the field of X-ray crystallography and especially X-ray crystallography of macromolecular compunds such as proteins, nucleic acid and further biologically relevant compounds.

An even further advantage of the methods of the present invention is the ease with which a UV radiation source such as a laser can be added to the sample environment. Also, the UV laser control may be integrated into data collection software. Additionally, because the method can be performed at short wavelengths, strong absorption at longer (> 1.7 Å) wavelengths can be avoided, and high resolution data can be easier collected compared to data collections at longer wavelengths (> 1.7 Å). Also, the method it is fully compatible with cryo-cooling if care is taken with respect to laser beam intensity and will furthermore greatly benefit from improved software packages that can model radiation damage in general.

The principle of X-ray cristallography consists in positioning a crystal into an X-ray beam and collecting diffracted X-rays with an X-ray diffraction pattern detector. Devices suitable for performing X-ray cristallography are well-kown in the art.

At least a portion of the diffracted X-rays is collected with an appropriate X-ray diffraction pattern detector. Usually, they are recorded using an area detector system such as image plates, multiwire detector systems, or CCD cameras e.g. MAR or ADSC mosaic CCD detector systems. In accordance with Bragg's law, the diffraction pattern from a crystal is an area of spots. An area detector collects these spots of the diffraction pattern and generates the diffraction data.

An X-ray diffraction data set consists of a large number of diffraction patterns recorded for different orientations of the crystal with different exposures of the detector. Each diffraction pattern can be integrated resulting in a list of (partial) diffraction intensities for a certain subset of spots. After appropriate data processing, a complete list of indexed reflections and their full intensities can be established.

To reconstruct the electron density $p(xyz)$ (which is used to model the atoms and molecules diffracting the X-rays) by Fourier transformation, for each reflection the structure factor amplitudes $|F_{hkl}|$ and the phases of the structural factors $F_{hkl}$, $\varphi_{hkl}$, need to be determined.

While structure factor amplitudes $|F_{hkl}|$ can be calculated from the intensities, the phases $\varphi_{hkl}$ cannot be measured directly.

Said phases are, however, derivable from the diffraction data collected. This is possible since the diffraction data collected according to the present invention comprises at least two sets of X-ray diffraction data, i.e. a first set of X-ray diffraction data and a second set of X-ray diffraction data, which are characterized in that collecting said sets of X-ray diffraction data from the crystal comprises exposing the crystal to UV radiation before the second set of X-ray diffraction data is collected.

The UV radiation used according to the present invention usually has a wavelength in the range of 30 nm to 400 nm. According to a particular embodiment, the UV radiation used is UV-C radiation, with a wavelength in the range of 100 to 350 nm and in particular 230 to 320 nm being preferred. For instance, exposing the crystal to a UV radiation having a wavelength of about 266 nm is especially suitable.

Expediently, said UV radiation has sufficient intensity so as to induce at least one change in the structure of the crystal. Preferably, the change in the crystal structure of the compound is caused by the cleavage of at least one linkage, especially of a covalent bond of the compound. Disulfide and/or thioester bonds have proven especially susceptible to UV-induced cleavage.

In order to induce specific changes in the crystal structure of the compound, UV radiation having an appropriate intensity is usually used. For instance, an intensity of 0.1 mW in a spot having a diameter of 150 $\mu$m was found to be expedient.

Suitable means for generating an appropriate UV radiation, e.g. a UV light beam, are well-known in the art. For instance, the UV radiation source can be a laser emitting UV radiation of the desired wavelength and intensity, in particular a laser emitting a corresponding UV light beam.

Thus, in order to expose the crystal to the UV radiation the crystal can be positioned in such a UV light beam.

According to a particular embodiment, the methods of the present invention comprise exposing the crystal in at least two different orientations in the UV beam, e.g. by rotating the crystal in the UV beam.

According to one aspect of the invention, the objective of exposing the crystal to the UV radiation is to induce at least one change in the crystal, preferably in the structure of the crystallized compound so that the set of X-ray diffraction data collected after the induction of said change differs from the set of X-ray diffraction data collected before (or without) the induction of said change. It is thus expedient to expose the crystal to the UV radiation after the collection of the first set of X-ray diffraction data has been completed, in particular if the first and second set of data are collected from the same crystal. X-ray diffraction data for the second set can be collected subsequent to or concomitantly with the exposure of the crystal to the UV radiation. Usually, it is expedient to expose the crystal to UV radiation for a time period sufficient to induce at least one change and then to start collecting the second set of X-ray diffraction data. When the collection of the second set of X-ray diffraction data is started, the exposure of the crystal to the UV radiation can be continued or discontinued.

Using UV radiation-inducted changes in the crystal structure for obtaining phase information is referred to as UV-RIP (short for UV-Radiation Induced Phasing).

The methods of the present invention are especially useful for crystals comprising a macromolecular compound.

As used herein, a macromolecular compound is a compound having a molecular weight of at least about 500 Da, in particular of at least about 1000 Da and especially of at least about 5000 Da. According to one aspect, the macromolecular compound comprises an amino acid sequence or a nucleic acid sequence, with the nucleic acid sequence comprising at least one brominated nucleic acid. The amino acid sequence of the macromolecular compound usually comprises 5 and in particular 10 to 49 amino acids (peptide), or at least 50 amino acids, at least 250 or at least 1000 amino acids (protein). The nucleic acid sequence of the macromolecular compound usually comprises 5 and in particular 10 to 49 nucleic acids (oligonucleotide) or at least 50 nucleic acids (polynucleotide). According to a further aspect, the macromolecular compound is a peptide, a protein, an oligonucleotide or a polynucleotide.

As used herein, the term crystal is used to describe an ordered solid phase arrangement of individual molecules. Usually, the molecules are assembled into a periodic lattice. For the purposes of the invention, a crystal usually comprises molecules of a principle compound, e.g. a marcomolecular compound, i.e. the compound that has been crystallized and whose structure is to be solved. In addition to said principle compound, a crystal can comprise further components such as solvent molecules and/or molecules that are associated with the molecules of the principle compound, e.g. ligands, substrates, etc.

The present invention further relates to a device for determining the three-dimensional structure of a compound comprising an X-ray diffractometer with an X-ray source from which X-rays are guided to a crystal location and with a detector for detecting diffracted X-rays, wherein a UV radiation source is provided from which UV radiation is guided to the crystal location. The crystal location can thus be exposed to UV radiation so that at least one change can be induced in a crystal of a compound if positioned in the crystal location.

The UV radiation source is in particular a laser emitting an ultraviolet light beam. The wavelength of the UV radiation emitted by the UV radiation source is preferably in the range of 30 to 400 nm, in particular in the range of 100 to 350 nm, more preferably in the range of 230 to 320 nm, most preferably about 266 nm.

In principle, the device according to the present invention may comprise any diffractometer known in the art. In general, such diffractometer includes an X-ray source, a means for holding and orienting the crystal at a crystal location and a means for detecting the diffraction pattern. In particular, the crystal which is positioned in the diffractometer's crystal location may be mounted on a pin on a goniometer head. The goniometer head in turn is mounted on a goniometer which allows the crystal to be positioned in different orientations in the X-ray beam. Therefore, the crystal may be exposed to UV radiation in at least two different orientations in the UV beam, e.g. by rotating the crystal in the UV beam. The electrons of the ordered atoms in a crystal diffract the X-rays in defined directions of space. Thus, the diffractometer can measure the distribution of electrons in the crystal.

The crystal is normally frozen in a stream of cold nitrogen gas, typically running at 100 K. Thus, the diffractometer usually further comprises a means for cooling the crystal. Alternatively, the crystal is maintained in an unfrozen state. This requires a different mounting technique which prevents the crystal from dehydration.

The X-ray source may be, for instance, a rotating anode generator producing an X-ray beam of a characteristic wavelength. The X-rays emitted from such X-ray source can be brought into the form of an X-ray beam. However, a synchrotron producing tuneable X-ray radiation provides additional advantages. If the X-ray source is a source of synchrotron radiation the X-rays will be emitted in the form of an X-ray beam. Before the X-ray beam reaches the crystal location, it may be passed through a helium flushed collimator in order to reduce air scattering and absorption.

The present invention further relates to the use of an UV radiation source for exposing a crystal of a compound to UV radiation and for inducing at least one change in the crystal.

Particular embodiments of the invention will now be explained with reference to the drawings, in which

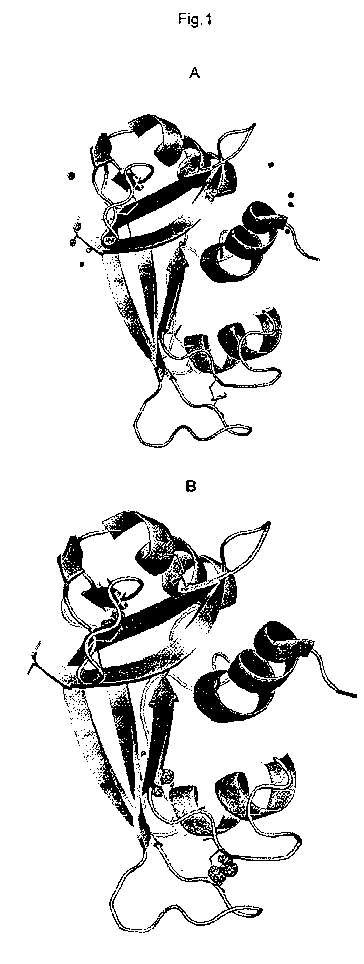

Figure 1   shows a comparison between X-ray damage (Figure 1a) and UV damage (Figure 1b) on ribonuclease A as difference maps calculated using refined model phases;

Figure 2   shows a ball-stick model indicating specific UV radiation damage on photoactive yellow protein as difference maps calculated using refined model phases.

An embodiment of the device for determining the structure of a compound will be described in the following. The device comprises an X-ray diffractometer, which is known per se in the art. It includes an X-ray source, means for holding and orienting the crystal and a detector for collecting X-ray diffraction data from the crystal (herein also called an X-ray diffraction pattern detector). The position of the crystal held by the X-ray diffractometer defines the crystal location of the X-ray diffractometer.

A synchrotron is used for producing a primary X-ray beam which is usually monochromated by a crystal monochromator. After passing through a collimator, the X-ray beam passes through the crystal which is mounted on the pin on a goniometer head at the crystal location. The goniometer head in turn is mounted on a goniometer which allows the crystal to be positioned in different orientations in the X-ray beam. Such a device for positioning the crystal is described e.g. in WO 00/40952, which is hereby incorporated herein by reference.

The X-ray diffraction pattern detector which is known per se in the art is arranged as appropriate. Usually, the X-ray pattern is recorded using an area detector system such as image plates, multiwire detector systems, or CCD cameras, e.g. MAR or ADSC mosaic CCD detector systems. The CCD camera may by coupled with computing devices for analyzing the measured diffraction data. The electrons of the ordered atoms in a crystal diffract the X-rays in defined directions. By recording the diffraction pattern on the X-ray diffraction pattern detector, the intensity of each reflection can be measured. Thus, a diffraction pattern can be generated which comprises reflections of different intensity. After appropriate data processing, a list of indexed reflections and their intensities can be established.

According to the present invention, the device additionally comprises a UV radiation source from which UV radiation is guided to the crystal in order to expose the crystal positioned in a UV beam to UV radiation. Suitable means for generating an appropriate UV beam are well known in the art. For instance, a laser emitting UV radiation of the desired wavelength can be used for generating the corresponding UV laser beam. The UV light beam emitted by the laser can be optically focused by a lens. A mirror-based lens system can be provided for focussing and/or directing the UV light beam to the crystal location of the diffractometer.

The methods of the present invention will now be described in further detail by means of the following examples.

UV radiation was used to induce specific radiation damage within crystalline structures. Seven proteins were studied, and two data sets were collected on each crystal. In between the data sets, the rotating crystals were exposed to UV laser light of 266 nm. Control data sets were collected where no UV radiation was used at all, or the crystal was exposed to UV radiation prior to X-ray data collection. Intensity changes between 4 and 20 % were obtained between the pair of data sets collected on each crystal. The structural changes were mainly located on the disulfide bonds, also for ribonuclease A, where the observed UV damage was remarkably distinct from what is observed for X-ray damage. The UV damage to the ordered water structure was minimal. One protein did not contain any disulfide bonds: In this case, a thio-ester link was broken, which provided sufficient phasing information. The substructure and phase determination methods were analogous to those described by Nanao et al. (2005), supra. In contrast to X-ray RIP, all structures could be readily solved, and showed phasing statistics that were superior to those obtained with X-ray RIP. UV-RIP is therefore a useful new method for obtaining experimental phases, either at synchrotrons or other X-ray sources.

Crystallization

All proteins were obtained as lyophilized powders from Sigma (except where noted otherwise) and could be used without further purification. Bovine insulin was dissolved in 20 mM phosphate buffer (pH 10.4) to a concentration of 20 mg/ml, porcine elastase (Roche) was dissolved in water to a concentration of 20 mg/ml. A higher concentration of hen egg white lysozyme (HEWL) was used: 100 mg/ml in 50 mM sodium acetate buffer (pH 4.5). Bovine ribonuclease A was dissolved in 50 mM sodium acetate buffer (pH 5.5) to a concentration of 10 mg/ml, whereas *Thaumatococcus*

*daniellii* thaumatin was dissolved in 20 mM sodium Hepes to a concentration of 35 mg/ml. Porcine trypsin was dissolved in 100 mM benzamidine to a concentration of 15 mg/ml. The crystallization and cryoprotection conditions are given in Table 4.

Because of the strong absorption of protein crystals at 266 nm, relatively small crystals were selected. In addition to the disulfide containing proteins elastase, insulin, lysozyme, trypsin, thaumatin, hewl and ribonuclease A, one non-disulfide protein was used: photoactive yellow protein (pyp). Pyp was expressed and purified as described by [Kort, R., Phillips-Jones, NM. K., van Aalten, D.M., Haker, A., Hoffer, S. M., Hellingwerf, K.H. & Crielaard, W. (1998) Biochim Biophys Acta 1385, 1-6; incorporated herein by reference]. Pyp crystals of space group $P6_5$ were grown, crystallised and cryoprotected as described in [Kort, R., Hellingwerf, K. H. & Ravelli, R. B. (2004) J Biol Chem 279, 26417-26424; incorporated herein by reference].

Beamline setup

All experiments were done on ID14-4 at the European Synchrotron Radiation Facility, Grenoble, France. The beamline optics include a toroidal mirror that focuses the X-ray beam to a typical size of 300x200 μm FWHM. Slits were used to reduce the beam-size to 100x100 μm at the crystal location. The experimental setup consisted of a minidiffractometer [Arzt, S., Beteva, A., Cipriani, F., Delageniere, S., Felisaz, F., Forstner, G., Gordon, E., Launer, L., Lavault, B., Leonard, G., Mairs, T., McCarthy, A., McCarthy, J., McSweeney, S., Meyer, J., Mitchell, E., Monaco, S., Nurizzo,, D., Ravelli, R., Rey, V., Shepard, W., Spruce, D., Svensson, O. & Theveneau, P. (2005) Prog Biophys Mol Biol 89, 124-152; incorporated herein by reference] with an online microspectrophotometer. The on-axis viewing of the minidiffractometer, in combination with a YAG (Yttrium Aluminium Garnet) screen, allowed an accurate co-axial visualization of the beam position. The spindle axis and crystal were aligned to coincide with the beam axis. The online UV/VIS microspectrophotometer consists of an Ocean Optics DH2000 deuterium tungsten halogen light source, a specially designed mirror-based lens system oriented perpendicular to the spindle axis, and an Ocean Optics HR2000 high resolution spectrophotometer. The 4-fold demagnifying mirror systems focused the probing light from a 600 μm fiber into a 150 μm spot on the crystal. Online UV/VIS measurement was used during X-ray exposure to verify the alignment of the X-ray beam, spindle, and microspectrophotometer axes, as the X-ray beam induces specific color changes in the exposed part of the crystal. The same setting was used to connect one microspectrophotometer lens with a JDS Uniphase (Nanolase) 266 nm UV laser through a 600 μm fiber. The resulting 150 μm diameter UV spot on the crystal was larger than the Y-ray beam (100 x 100 μm), and its intensity was measured to be about 0,1 mW. The tight setup did not allow to move the square 2x2 CCD ADSC Q4R detector to be moved closer than 140 mm, corresponding to a maximum circular resolution of 1.6 Å while using a wavelength of 0.939 Å.

Table 5 gives the molar extinction coefficients of the seven proteins at 266 nm, as calculated using tabulated values for tyrosine (989 $M^{-1}$ $cm^{-1}$), tryptophan (4781 $m^{-1}$ $cm^{-1}$), phenylalanine (88 $M^{-1}$ $cm^{-1}$) and cysteine (200 $M^{-1}$ $cm^{-1}$). Given the high concentration of protein within the crystals (table 5), high optical densities are obtained for crystals of the sizes typically used for macromolecular crystallography experiments. The depth of penetration of the 266 nm laser light in the crystals varied between a few tens to just a few microns. The crystals were rotated throughout the UV irradiation in order to have nevertheless a significant number of unit cells affected by the UV radiation. Tests done with varying 'burn' times showed that an irradiation of 5 minutes gave significant differences for most samples tested. No clear differences were observed between leaving the UV laser on or off during the collection of the second data set. The setup generated a power density of about 0.1 mW in a 150 μm spot ($10^{14}$ photons/s). The corresponding heat load was estimated based on studies done on crystal heating due to X-ray beam absorption at 100 K. Mhaisekar et al, J. Synchroton Radiat 12, 318-328, have calculated an external temperature rise of 7 K for an X-ray flux ($4x10^{14}$ photons/s $mm^2$, 13 keV) that is representative for the unattenuated beam at the beamline used. This corresponds to a power of 0.3 mW, as calculated using RADDOSE [Murray, J W., Garman, E. F. & Ravelli, R. B. G. (2004) Journal of Applied Crystallography 37, 513-522; incorporated herein by reference] for a typical protein and a 100 x 100 μm beam. Although the UV laser gives a smaller power deposition in the crystal, sharper internal temperature gradients can be expected due to the non-uniform absorption. However, following Mhaisekar et al., *supra,* the temperature difference between the outside of the crystal and the cold gas stream is linear with power, whereas the internal temperature rise within the crystal is always minor in comparison. Therefore, the heating caused by the UV laser is not expected to exceed the heating generated by the unattenuated X-ray beam.

Diffraction Data Collection and Processing

The data collection strategy was to collect two successive complete low-redundant data sets using a highly attenuated X-ray beam (named 'before' and 'UV' data set). The beam was highly attenuated so as to collect diffraction data up to the corners of the detector, without saturating the low-resolution spots. The dose used per data set was similar to the doses used for the 'before' and 'after' data sets as described in Nanao, M. H., Sheldrick, G. M. & Ravelli, R. B.

(2005) Acta Crystallogr D Biol Crystalogr 61, 1227-1237; incorporated herein by reference. In between the two data sets, the crystals were exposed to a UV 'burn' of 5 minutes during which the crystal was rotated in steps of 45 ° for about 3 full 360 ° rotations. The UV laser was either left on (trypsin, RNAse, hewl, insulin, thaumatin) or off (elastase, pyp) during the collection of the second data set. The UV-exposure mode was determined empirically.

In order to distinguish between specific X-ray damage and UV damage, control data series were taken on a different part of the crystal for both trypsin and elastase. Each control data series consisted of two complete data sets, collected successively on the same part of the crystal and with the same X-ray dose as the UV series. However, no UV laser illumination was used either before or during the collection of the second data sets.

All data were processed in *XDSIXSCALE* [Kabsch, W. (1988) Journal of Applied Crystallography 21, 916-924; incorporated herein by reference] and exported to merged and unmerged scalepack files. The diffraction data in the corners of the detector were also integrated in order to enhance the performance of SHELXE, although the completeness between 1.6 Å and 1.5 Å was limited. The 'before' and 'UV' data sets were put on an identical absolute scale using XSCALE. The latest version of the program SHELXC was used to determine the difference structure factors ΔFs, allowing the 'UV' data set to be downscaled by a factor K, to compensate for the net overall loss of ordered electrons.

Phasing

UV-RIP phasing was performed using an identical protocol to that described earlier for X-ray RIP [Nanao, M. H., Sheldrick, G. M. & Ravelli, R. B. (2005) Acta Crystallogr D Biol. Crystallogr 61, 1227-1237; incorporated herein by reference].

The resolution for phasing (Table 3) was chosen based on the resolution shell at which $<\Delta F>/<\sigma_{\Delta F}>$ is greater than 1.5. Seventy scale factors *K*, ranging from 0.90 to 1.03, were used to modify the $F_{UV}$ dataset. The program SHELXD [Schneider, T. R. & Sheldrick, G. M. (2002) Acta Crystallogr D Biol Crystallogr 58, 1772-9; incorporated herein by reference] was used to find an initial substructure of UV-susceptible sites. All *SHELXD* processes were run for 500 cycles in Patterson seeding mode. Solutions from *SHELXD* were subsequently submitted to *SHELXE* [Sheldrick, G. M. (2002) Zeitschrift für Kristallographie 217, 644-650; incorporated herein by reference] with zero cycles without resolving the phase ambiguity in order to allow the identification of UV-induced sites (negative occupancies) as well as the evaluation of the initial correlation coefficient to the full resolution of the data. The RIP substructures, including both positive and negative sites were then re-cycled through *SHELXE* with 100 cycles of density modification. Difference Fourier analysis within *SHELXE* was used to update the RIP substructure, which was re-submitted to *SHELXE.* This last iteration was repeated until phases became interpretable. For most of the data presented herein, however, no iterations were needed.

UV-RIP Signal

Two important metrics - the $R_{int}$-value between the 'before' and 'UV' data sets, as well as the average differences of $<\Delta F>/<\sigma_{\Delta F}>$ - can be used to address the item whether UV radiation induces damage in crystals of macromolecular compounds at cryogenic temperature: Table 1 shows that both statistics suggest that substantial changes were induced in all of the test proteins. Indeed, the R-value for trypsin between 'before' and 'UV' data set is more than 20 %, whereas the internal R-value of each of those data sets is only 5 %. The observed UV-induced difference for trypsin is far greater than what is expected for dispersive differences within MAD data sets, even for exceptional cases such as MAD data collected around the $M_{IV}$ edge of U. Additionally, tables of $<\Delta F>/<\sigma_{\Delta F}>$ versus resolution indicate significant differences that often extend the full resolution of the data. For example, for trypsin, $<\Delta F>/<\sigma_{\Delta F}>$ is still 1.67 at the highest resolution shell.

Two successively collected data sets might also show X-ray damage between them. In order to minimize this, a maximum attenuation was chosen for each crystal while preserving diffraction at 1.5 Å. In addition, control data series were collected for trypsin and elastase, where the long needle-like crystals permitted the collection of two, well separated, data series. On one end of the crystal, 2 successive control data sets, $F_1$ and $F_2$, were collected, whereas on the other end of the crystal an $F_{before}$ data set was collected, followed by an UV burn and a $F_{UV}$ data set. Neither the trypsin nor the elastase control datasets shows signs of radiation damage: the $R_{int}$ and overall $<\Delta F>/<\sigma_{\Delta F}>$ between $F_1$ and $F_2$ were, respectively, 4.6 % and 0.73 for trypsin, and 1.9 % and 0.67 for elastase. The $R_{int}$ values are smaller than the internal $R_{merge}$ values for the individual data sets, indicating that the two data sets are not significantly different from each other. Nevertheless, the programs SHELXD and SHELXE were used to calculate differences between $F_1$ and $F_2$ in a similar way as for the differences between $F_{before}$ and $F_{UV}$. As expected, no correct substructures or interpretable phases could be obtained for the control data sets. Thus, the strong attenuation appears to have been successful, and X-ray damage contributed very little, if any, signal to the $F_{before}$ - $F_{UV}$ differences.

UV-RIP versus X-ray RIP

The most striking similarity is that UV radiation, like X-ray radiation, affects the disulfide bonds. UV radiation is known to excite, ionize and degrade aromatic residues. It is therefore surprising that any structural changes on aromatic residues were not observed; possibly, this damage would not be observable in X-ray diffraction electron density maps at 1.5 V Å, or alternatively, aromatic UV damage might be reduced at cryogenic temperatures. However, the UV-damage induced very distinct alterations of disulfide bonds. The ranking of susceptibility of each disulfide bond was different for X-ray and UV damage.

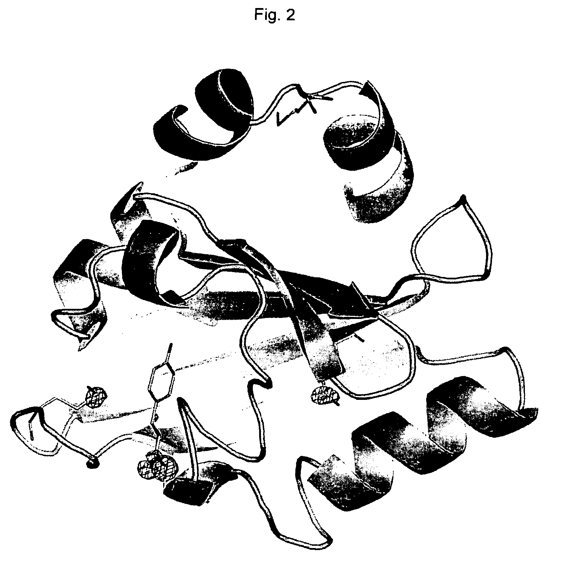

Dramatic differences were found in particular for ribonuclease A. While ribonuclease A, despite substantial differences between $F_{before}$ and $F_{after}$, could not be solved by X-ray RIP, it can readily be solved by UV-RIP. The $R_{int}$ between the before- and after-data set was smaller for UV-RIP than for X-ray RIP. However, these smaller and possibly less accurate differences were readily interpreted by the substructure determination program SHELXD. No correct substructures could be found for X-ray RIP, whereas UV-RIP gave correct solutions for a wide range of scale factors K (0.96314-1.00214), resulting in excellent phases in subsequent steps. Figure 2 shows the difference Fourier maps, using refined model phases and contoured at +/-8σ, for X-ray RIP (Fig 2a) and UV-RIP (Fig 2b). Fig 2a shows how X-rays do not only effect the disulfide bonds, but also carboxyl groups, including the C-terminus, and ordered water molecules surrounding the protein. In contrast, UV-radiation only shows structural changes at the disulfide bonds, at much higher sigma levels than those observed for X-ray RIP. The sharper contrast between highly and weakly susceptible sites for UV-RIP compared to X-ray RIP, makes the first one more successful for structure determination.

Lysozyme presented significant challenges to structure solution by X-ray RIP, requiring a large number of SHELXE recycles as well as accurate fine-tuning of the *K* downscaling parameter. Even with 11 SHELXE iterations, only one single scale factor *K* yielded phases that led to an interpretable electron density map. Although HEWL structure solution was still no trivial using UV-RIP, it was easier than for X-ray RIP. A range of scale factors *K*, from 0.99100 to 0.99843 yielded interpretable maps, and fewer SHELXE iterations were required before convergence was reached. Also, different non-disulphide susceptible sites were found for X-ray as for UV damage resulting in a low $R_{int}$ value (4.2 %) and a low average signal to noise $<\Delta F>/<\sigma_{\Delta F}>$ between $F_{before}$ and $F_{UV}$ (Table 1).

The large molar extinction coefficient and relatively larger crystal thickness might also have compromised the signal obtained for elastase ($R_{int}$ = 6.9 %. $<\Delta F>/<\sigma_F>$ = 1,44, Table 1). Compared to X-ray RIP, a smaller range of scale factors K yielded interpretable electron density maps for UV-RIP. However, much better statistics were obtained during the substructure determination step. Table 4 gives a comparison of the correlation coefficients (CC) between the observed and calculated normalised structure factor differences, as obtained with the program SHELXD. Better CC's were obtained for all proteins while comparing UV- with X-ray RIP; the latter technique did not yield any valid substructure solutions for photoactive yellow protein and ribonuclease A. For all proteins except elastase, a larger range of scale factors K was found while using UV rather than X-rays for radiation-damage induced phasing.

Non-disulfide containing proteins

We tested one non-disulfide containing protein for UV-RIP phasing: photoactive yellow protein (pyp). Previous attempts to phase this protein using X-ray RIP had failed. This protein has a chromophore, p-coumaric acid, covalently bound through a thio-ester linkage to a cysteine. Upon UV-irradiation, the sulfur-carbon bond is disrupted, and the Sy68 moves to a new position, close to one observed for an early protein photocycle intermediate. This site could be found by SHELXD, and although several subsequent iterations were needed in SHELXE to get to interpretable maps, structure solution was possible for a large series of scale factors K. Interestingly, UV-susceptible methionines were also contributing to the substructure (Figure 2). Pyp is the first non-disulfide containing protein that could be solved by radiation damage.

Table 1a. Data collection statistics for elastase.

| | elastase | | | |
|---|---|---|---|---|
| | crystal position A | | crystal position B | |
| | before | UV | 1 | 2 |
| Space Group | $P2_12_12_1$ | $P2_12_12_1$ | $P2_12_12_1$ | $P2_12_12_1$ |
| Unit Cell Parameters (Å) | a=49.9 b=58.0 c=74.3 | a=49.9 b=57.8 c=74.3 | a=49.72 b=57.64 c=74.12 | a=49.72 b=57.64 c=74.12 |
| Resolution (highest | 50.0 - 1.49 | 50.0 - 1.49 | 50.0 - 1.55 | 50.0 - 1.55 |

(continued)

|  | elastase | | | |
| --- | --- | --- | --- | --- |
|  | crystal position A | | crystal position B | |
|  | before | UV | 1 | 2 |
| res) (Å) | (1.59 - 1.49) | (1.59 - 1.49) | (1.65 - 1.55) | (1.65 - 1.55) |
| No. reflections | 151815 (13790) | 152423 (14086) | 129673 (8517) | 129760 (8520) |
| No. unique reflections | 64425 (8770) | 64610 (8919) | 55126 (5763) | 55120 (5762) |
| Completeness (%)[+] | 94.8 (72.8) | 95.1 (74.1) | 91.3 (55.8) | 91.3 (55.8) |
| <I/sigma(I)> | 15.70 (4.52) | 15.58 (3.79) | 25.96 (10.50) | 25.92 (10.07) |
| R-factor (%)[‡] | 4.1 (14.1) | 4.1 (17.4) | 2.5 (5.2) | 2.5 (5.3) |
| Redundancy | 2.36 (1.57) | 2.36 (1.58) | 2.35 (1.48) | 2.35 (1.48) |
| $R_{int}$ vs before (with local scaling) (%)[#] | 6.9 | | 1.9 | |
| $<\Delta F>/<\sigma_{\Delta F}>$ | 1.44 | | 0.67 | |
| Resolution where $<\Delta F>/<\sigma_{\Delta F}> > 1.5$ (Å) | 1.9 | | - | |

Table 1b. Data collection statistics for insulin and lysozyme.

|  | insulin | | lysozyme | |
| --- | --- | --- | --- | --- |
|  | before | UV | before | UV |
| Space Group | $I2_13$ | $I2_13$ | $P4_32_12$ | $P4_32_12$ |
| Unit Cell Parameters (Å) | a=77.92 | a=77.95 | a=76.49 c=37.12 | a=76.58 c=37.16 |
| Resolution (highest res) (Å) | 50.0 - 1.49 (1.59 - 1.49) | 50.0 - 1.49 (1.59 - 1.49) | 50.0 - 1.49 (1.59 - 1.49) | 50.0 - 1.49 (1.59 - 1.49) |
| No. reflections | 113693 (10680) | 114479 (11438) | 114770 (9724) | 115979 (10849) |
| No. unique reflections | 24048 (3529) | 24356 (3839) | 32881 (4561) | 33621 (5303) |
| Completeness (%)[+] | 96.3 (79.7) | 97.5 (86.7) | 95.4 (74.7) | 97.5 (86.8) |
| <I/sigma(I)> | 20.12 (3.34) | 17.33 (2.49) | 16.23 (2.66) | 15.39 (2.47) |
| R-factor (%)[‡] | 4.3 (34) | 5.1 (45.8) | 4.3 (32.4) | 4.5 (34.7) |
| Redundancy | 4.73 (3.03) | 4.70 (2.98) | 3.49 (2.13) | 3.45 (2.05) |
| $R_{int}$ vs before (with local scaling) (%)[#] | 12.4 | | 4.2 | |
| $<\Delta F>/<\sigma_{\Delta F}>$ | 3.79 | | 1.05 | |
| Resolution where $<\Delta F>/<\sigma_{\Delta F}>> 1.5$ (Å) | 1.6 | | 3.3 | |

Table 1c. Data collection statistics for pyp and ribonuclease A.

|  | pyp | | ribonuclease A | |
| --- | --- | --- | --- | --- |
|  | before | UV | before | UV |
| Space Group | $P6_5$ | $P6_5$ | $P3_221$ | $P3_221$ |
| Unit Cell Parameters (Å) | a=39.9 b=116.8 | a=39.9 b=116.8 | a=64.18 c=63.60 | a=64.17 c=63.59 |

(continued)

|  | pyp | | ribonuclease A | |
|---|---|---|---|---|
|  | before | UV | before | UV |
| Resolution (highest res) (Å) | 50.0 - 1.40 (1.49 - 1.40) | 50.0-1.40 (1.49-1.40) | 50.0 - 1.49 (1.59 - 1.49) | 50.0-1.49 (1.59 - 1.49) |
| No. reflections | 110460 (15678) | 110580 (15764) | 120132 (9369) | 121278 (10437) |
| No. unique reflections | 20678 (3471) | 20699 (3489) | 44548 (5031) | 45405 (5891) |
| Completeness (%)[+] | 99.7 (98.1) | 99.8 (98.6) | 91.7 (58.6) | 93.5 (68.6) |
| <I/sigma(I)> | 12.59 (3.19) | 11.39 (2.15) | 19.12 (3.85) | 17.45 (3.29) |
| R-factor (%)[‡] | 6.6 (46.6) | 7.9 (71.1) | 3.5 (21.9) | 3.8 (25.3) |
| Redundancy | 5.34 (4.52) | 5.34 (4.52) | 2.70 (1.86) | 2.67 (1.77) |
| $R_{int}$ vs before (with local scaling) (%)[#] |  | 10.9 |  | 7.5 |
| $<\Delta F>/<\sigma_{\Delta F}>$ |  | 1.90 |  | 1.97 |
| Resolution where $<\Delta F>/<\sigma_{\Delta F}> > 1.5$ (Å) |  | 1.75 |  | 1.8 |

Table 1d. Data collection statistics for thaumatin

|  | thaumatin | |
|---|---|---|
|  | before | UV |
| Space Group | $P4_12_12$ | $P4_12_12$ |
| Unit Cell Parameters (Å) | a=57.90 c=150.20 | a=57.91 c=150.26 |
| Resolution (highest res) (Å) | 50.0 - 1.48 (1.59 - 1.48) | 50.0 - 1.48 (1.59 - 1.48) |
| No. reflections | 271898 (27143) | 272981 (27536) |
| No. unique reflections | 79127 (13564) | 79192 (13637) |
| Completeness (%)[+] | 97.3 (86.4) | 97.4 (86.8) |
| <I/sigma(I)> | 18.71 (4.34) | 17.41 (3.81) |
| R-factor (%)[‡] | 4.4 (18.7) | 4.8 (21.9) |
| Redundancy | 3.44 (2.00) | 3.45 (2.02) |
| $R_{int}$ vs before (with local scaling) (%)[#] | 9.1 | |
| $<\Delta F>/<\sigma\Delta F>$ | 2.35 | |
| Resolution where $<\Delta F>/<\sigma_{\Delta F}> > 1.5$ (Å) | 1.7 | |

Table 1e. Data collection statistics for trypsin.

|  |  | crystal position A | | crystal position B | |
|---|---|---|---|---|---|
|  |  | before | UV | 1 | 2 |
| Space Group |  | $P2_12_12_1$ | $P2_12_12_1$ | $P2_12_12_1$ | $P2_12_12_1$ |
| Unit Cell Parameters (Å) |  | a=54.28 b=58.28 c=66.73 | a=54.33 b=58.33 c=66.64 | a=54.24 b=58.28 c=66.73 | a=54.25 b=58.30 c=66.75 |

(continued)

| | crystal position A | | crystal position B | |
|---|---|---|---|---|
| | before | UV | 1 | 2 |
| Resolution (highest res) (Å) | 50.0 - 1.49 (1.59 - 1.49) | 50.0 - 1.49 (1.59 - 1.49) | 50.0 - 1.49 (1.59 - 1.49) | 50.0 - 1.49 (1.59 - 1.49) |
| No. reflections | 125014 (12017) | 126896 (12625) | 125742 (12143) | 125799 (12242) |
| No. unique reflections | 61815 (8408) | 61880 (8458) | 61798 (8379) | 61759 (8390) |
| Completeness (%)[+] | 92.5 (70.9) | 92.6 (71.4) | 92.5 (70.7) | 92.4 (70.8) |
| $<I/sigma(I)>$ | 13.85 (4.90) | 11.48 (2.58) | 11.17 (3.99) | 10.97 (3.72) |
| R-factor (%)[‡] | 4.6 (13.0) | 5.8 (29.8) | 5.4 (15.8) | 5.5 (17.5) |
| Redundancy | 2.02 (1.43) | 2.05 (1.49) | 2.03 (1.45) | 2.04 (1.46) |
| $R_{int}$ vs before (with local scaling) (%)[#] | 20.5 | | 4.6 | |
| $<\Delta F>/<\sigma_{\Delta F}>$ | 1.97 | | 0.73 | |
| Resolution where $<\Delta F>/<\sigma_{\Delta F}> > 1.5$ (A) | 1.8 | | - | |

Notes to tables 1a,b,c,d,e:

[‡] R-factor is
$$\frac{\sum \left| I(h,i) - I(h) \right|}{\sum I(h)}$$
where $I(h)$ is the intensity of the reflection with index $h$, and $I(h,i)$ is the intensity of the symmetry related ($i$) reflection with index $h$

[+] Completeness is sometimes compromised solely for the higher resolution shells, as measurements in the corners of the square detector were included.

[#] From XPREP

Table 2a. Substructure Solution for elastase, insulin lysozyme, and pyp.

| | elastase | insulin | lysozyme | pyp |
|---|---|---|---|---|
| FIND/DSUL | 4/4 | 3/3 | 8/4 | 3/0 |
| Range scale factor $K$*UV | 0.99286-1.00029 | 0.90000-1.03000 | 0.99100-0.99843 | 0.98357-0.99100 |
| Res for Shelxd (Å) | 1.9 | 1.6 | 2.9 | 1.75 |
| Expanded to ($A$) | 1.5 | 1.5 | 1.5 | 1.4 |
| $K$ for best CC | 0.9871 | 0.92786 | 0.99286 | 0.96314 |
| $CC_{best}$ (%)[+] UV | 20.9 | 33.3 | 36.5 | 17.4 |
| $CC_{weak}$ (%)[+]UV | 8.9 | 18.8 | 16.9 | 9.8 |
| PATFOM[+] | 24.1 | 29.4 | 9.9 | 26.7 |
| Solvent content used in SHELXE (%) | 39 | 64 | 35 | 40 |
| K for best Pseudo free CC | 0.99657 | 0.97986 | 0.99657 | 0.99100 |
| contrast[‡] | 0.400 | 1.019 | 0.372 | 0.476 |
| connectivity[‡] | 0.890 | 0.946 | 0.898 | 0.901 |

(continued)

|  | elastase | insulin | lysozyme | pyp |
|---|---|---|---|---|
| Pseudo free CC (%)[‡] | 71.8 | 81.5 | 70.8 | 71.40 |
| wMPE initial (°)[‡] | 70.8 | 62.7 | 83.2 | 68.3 |
| Final wMPE (°)[‡] | 39.1 | 22.9 | 41.6 | 31.3 |
| #SHELXE iterations | 2 | 1 | 7 | 2 |

Table 2b. Substructure Solution for ribonuclease A, thaumatin, and trypsin.

|  | ribonuclease A | thaumatin | trypsin |
|---|---|---|---|
| FIND/DSUL | 3/3 | 8/8 | 4/4 |
| Range scale factor $K$[#] | 0.96314-1.00214 | 0.90000-1.03000 | 0.94457-1.01700 |
| Res for Shelxd (Å) | 1.85 | 1.7 | 1.5 |
| Expanded to (Å) | 1.5 | 1.48 | 1.5 |
| $\underline{K}$ for best CC | 0.97800 | 0.96871 | 0.93900 |
| $CC_{best}$(%)[+] | 18.1 | 31.2 | 22.0 |
| $CC_{weak}$ (%)[+] | 8.2 | 16.7 | 10.5 |
| PATFOM[+] | 20.4 | 8.8 | 19.7 |
| Solvent content used in SHELXE (%) | 50 | 50 | 41 |
| K for best Pseudo free CC | 0.99286 | 1.00029 | 0.99100 |
| contrast[‡] | 0.689 | 0.687 | 0.452 |
| connectivity[‡] | 0.943 | 0.930 | 0.902 |
| Pseudo free CC (%)[‡] | 83.4 | 82.9 | 75.8 |
| wMPE initial (°)[‡] | 74.7 | 66.7 | 68.9 |
| Final wMPE (°)[‡] | 26.4 | 24.4 | 35.4 |
| #SHELXE iterations | 1 | 1 | 1 |
| Notes to tables 2a,b:<br>[#] Yielding a Pseudo Free CC of >70 %<br>[+] Solution from SHELXD with highest $CC_{best}$<br>[‡] Solution from SHELXE with highest pseudo-free CC | | | |

Table 3a . Refinement Statistics for elastase and Insulin.

|  | Elastase | | Insulin | |
|---|---|---|---|---|
|  | before | after | before | after |
| Resolution (Å)[+] | 45-1.5 (1.58 -1.50) | | 45-1.5 (1.58 - 1.50) | |
| $R_{cryst}$ (%)[+] | 12.4 (12.5) | 12.3 (12.3) | 14.8 (16.8) | 14.8 (16.7) |
| $R_{free}$ (%)[+] | 16.1 (19.9) | 16.1 (19.6) | 16.4 (18.7) | 16.3(18.9) |
| No. non-solvent atoms | 1852 | 1852 | 413 | 413 |
| No. solvent atoms | 275 | 275 | 57 | 57 |
| mean B in $Å^2$ | 8.5 | 8.6 | 15.9 | 15.9 |
| Ramachandran allowed/additional/ disallowed | 86.9/13.1/ 0.0 | 86.9/13.1/ 0.0 | 93.0 / 7.0 / 0.0 | 93.0/7.0/ 0.0 |

(continued)

|  | Elastase | | Insulin | |
|---|---|---|---|---|
|  | before | after | before | after |
| RMS deviations from ideality |  |  |  |  |
| Bond lengths in Å | 0.019 | 0.019 | 0.021 | 0.021 |
| Bond angles in ° | 1.7 | 1.7 | 1.9 | 1.8 |

Table 3b . Refinement Statistics for lysozyme and ribonuclease A.

|  | Lysozyme | | Ribonuclease A | |
|---|---|---|---|---|
|  | before | after | before | I after |
| Resolution (Å)[+] | 45-1.51 (1.59-1.50) | | 45-1.51 (1.59-1.51) | |
| $R_{cryst}$(%)[+] | 14.7 (13.8) | 14.7 (14.7) | 14.3 (13.7) | 14.3 (13.7) |
| $R_{free}$(%)[+] | 20.4 (25.9) | 21.1 (28.8) | 17.8(18.7) | 17.8(18.6) |
| No. non-solvent atoms | 1023 | 1023 | 957 | 957 |
| No. solvent atoms | 118 | 118 | 161 | 161 |
| mean B in $Å^2$ | 14.3 | 14.4 | 11.2 | 11.5 |
| Ramachandran allowed/additional/ disallowed | 88.5 / 11.5/0.0 | 89.4/10.6/0.0 | 88.7 / 11.3 / 0.0 | 89.6 / 10.4 / 0.0 |
| RMS deviations from ideality |  |  |  |  |
| Bond lengths in Å | 0.025 | 0.027 | 0.022 | 0.022 |
| Bond angles in ° | 1.9 | 2.0 | 1.9 | 1.9 |

Table 3c. Refinement Statistics for Thaumatin and Trypsin.

|  | Thaumatin | | Trypsin | |
|---|---|---|---|---|
|  | before | after | before | after |
| Resolution (Å)[+] | 45-1.5 (1.58 -1.50) | | 45-1.50 (1.58-1.50) | |
| $R_{cryst}$(%)[+] | 12.2 (12.5) | 12.2 (12.5) | 10.5 (9.2) | 10.4 (9.0) |
| $R_{free}$ (%)[+] | 15.9 (19.6) | 15.9 (19.6) | 13.9 (16.0) | 13.9 (16.0) |
| No. non-solvent atoms | 1623 | 1623 | 1803 | 1803 |
| No. solvent atoms | 336 | 336 | 314 | 314 |
| mean B in $A^2$ | 9.5 | 9.5 | 6.6 | 6.6 |
| Ramachandran allowed/additional/disallowed | 91.1/8.9/ 0.0 | 91.1/8.9/ 0.0 | 87.2 / 12.8 / 0.0 | 87.2 / 12.8 / 0.0 |
| RMS deviations from ideality |  |  |  |  |
| Bond lengths in Å | 0.021 | 0.020 | 0.021 | 0.020 |
| Bond angles in ° | 1.9 | 1.8 | 1.9 | 1.9 |
| Notes to tables 3a,b,c: [+] Statistics for the outer shell are specified in parenthesis | | | | |

Table 4 . Crystallization and Cryoprotection conditions.

| Protein | Crystallization conditions | Cryoprotectant |
|---|---|---|
| porcine elastase | 0.25 M ammonium sulfate, 100 mM sodium acetate pH 5.0 | 30 % gylcerol |
| bovine insulin | 0.4 M NaPO$_4$/Na$_2$HPO$_4$ pH 10.4, 1 mM EDTA | 30 % gylcerol |
| hen egg white lysozyme | 30 % PEG 5000 MME, 1 M NaCl, 50 mM sodium acetate pH 4.5 | 30 % PEG 400 |
| bovine ribonuclease A | 1.75 M ammonium sulfate, 2 M NaCl, 100 mM sodium acetate pH 5.5 | - |
| thaumatin | 0.9 M sodium/potassium tartrate, 100 mM HEPES pH 7.3, 15 % glycerol | 30 % gylcerol |
| procine trypsin | 25 % PEG 8000 MME, 0.2 M ammonium sulfate, 100 mM Tris-HCl pH 8.0 | 15 % gylcerol |

Table 5. Spectroscopic parameters

| | Elastase | Insulin | Lysozyme |
|---|---|---|---|
| #free cycteines | 0 | 0 | 0 |
| #Cystines | 4 | 3 | 4 |
| #phenylalanine | 3 | 3 | 3 |
| #tyrosine | 11 | 4 | 3 |
| #tryptophan | 7 | 0 | 6 |
| molar extinction coeff 266 nm (cm$^{-1}$M$^{-1}$) | 45410 | 4820 | 32717 |
| protein concentration (mM) | 31 | 84 | 61 |
| Cystine contribution§ at 266 nm (%) | 2 | 17 | 3 |
| Crystal dimensions ($\mu$m) | 250x120x120 | 110x110x110 | 130x100x90 |

| | PYP | Ribonuclease A | Thaumatin | Trypsin |
|---|---|---|---|---|
| #free cycteines | 1 | 0 | 0 | 0 |
| #Cystines | 0 | 4 | 8 | 6 |
| #phenylalanine | 9 | 3 | 11 | 3 |
| #tyrosine | 5 | 6 | 8 | 10 |
| #tryptophan | 1 | 0 | 3 | 4 |
| molar extinction coeff 266 nm (cm$^{-1}$M$^{-1}$) | 10518 | 6998 | 24823 | 30478 |
| protein concentration (mM) | 59 | 43 | 26 | 32 |
| Cystine contribution§ at 266 nm (%) | 0 | 16 | 9 | 5 |
| Crystal dimensions | 180x80x80 | 130x130x90 | 180x110x110 | 220x80x80 |

(continued)

| | PYP | Ribonuclease A | Thaumatin | Trypsin |
|---|---|---|---|---|
| ($\mu$m) | | | | |
| $\S\varepsilon_{cystine}/\varepsilon_{total}$x100% | | | | |

**Claims**

1. A method of inducing at least one change in a crystal of a compound, which comprises providing the crystal and exposing the crystal to UV radiation.

2. The method of claim 1, wherein the change is a change in the crystal structure of the compound.

3. The method of claim 2, wherein the change in the crystal structure of the compound is caused by the break of a bond of the compound.

4. The method of claim 3, wherein the bond is selected from the group consisting of a disulfide bond and a thioester bond.

5. A method of generating X-ray diffraction data from a compound, which method comprises providing a crystal of the compound, collecting a first set of X-ray diffraction data from the crystal, exposing the crystal or a further crystal of the compound to UV radiation, and collecting a second set of X-ray diffraction data from said crystal or the further crystal.

6. A method of determining a three-dimensional structure of a compound, which method comprises providing a crystal of the compound, collecting a first set of X-ray diffraction data from the crystal, exposing the crystal or a further crystal of the compound to UV radiation, collecting a second set of X-ray diffraction data from the crystal or the further crystal, and determining the three-dimensional structure of the compound from the first and second set of X-ray diffraction data.

7. The method of claim 5 or 6, wherein the crystal and the further crystal are isomorphous.

8. The method of claim 5 or 6, wherein the first data set is collected from a part of the crystal and the second data set is collected from a further part of the crystal, the part and the further part being different.

9. The method of claim 8, wherein the part and the further part of the crystal are isomorphous.

10. The method of any one of claims 1 to 9, wherein the UV radiation has a wavelength in the range of 30 to 400 nm.

11. The method of claim 10, wherein the UV radiation has a wavelength in the range of 230 to 320 nm.

12. The method of claim 10 or 11, wherein the UV radiation has a wavelength of about 266 nm.

13. The method of any one of claims 1 to 12, wherein exposing the crystal or the further crystal to the UV radiation comprises positioning the crystal in a UV beam.

14. The method of claim 13, wherein the UV beam is UV laser beam.

15. The method of claim 13, wherein the crystal or the further crystal is exposed in at least two different orientations in the UV beam.

16. The method of any one of claims 1 to 15, wherein the crystal is exposed to UV radiation before the collection of the second set of X-ray diffraction data.

17. The method of claim 16, wherein the exposure of the crystal or the further crystal to the UV radiation is continued during the collection of the second set of X-ray diffraction data.

18. The method of any one of claims 1 to 17, wherein collecting X-ray diffraction data comprises positioning the crystal or the further crystal in an X-ray beam and collecting diffracted X-rays with an area detector system.

19. The method of claim 18, wherein the crystal or the further crystal is positioned in at least two different orientations in the X-ray beam.

20. A device for determining the three-dimensional structure of a compound comprising an X-ray diffractometer with an X-ray source from which X-rays are guided to a crystal location and with a detector for detecting diffracted X-rays, **characterized by** a UV radiation source from which UV radiation is guided to the crystal location.

21. The device of claim 20, wherein the UV radiation source is a laser emitting an UV light beam.

22. The device of claims 20 or 21, wherein the X-ray source emits X-rays in the form of an X-ray beam or the X-rays emitted from the X-ray source are brought into the form of an X-ray beam.

23. The use of an UV radiation source for exposing a crystal of a compound to UV radiation and for inducing at least one change in the crystal.

Fig.1

A

B

Fig. 2

**European Patent Office**

**EUROPEAN SEARCH REPORT**

Application Number

EP 06 00 2491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OBADAL M ET AL: "Structure evolution of alpha- and beta-polypropylenes upon UV irradiation: A multiscale comparison" POLYMER DEGRADATION AND STABILITY, BARKING, GB, vol. 88, no. 3, June 2005 (2005-06), pages 532-539, XP004789248 ISSN: 0141-3910 * abstract * * page 533, right-hand column, paragraph "2.2 UV exposure" * * page 535, right-hand column * * figures 4,5 * | 1-3,5,6, 13,16,23 | INV. G01N23/20 G01N23/207 |
| X | PEARSON A R ET AL: "Catching catalysis in the act: using single crystal kinetics to trap methylamine dehydrogenase reaction intermediates" BIOCHIMICA ET BIOPHYSICA ACTA (BBA) - PROTEINS & PROTEOMICS, ELSEVIER, vol. 1647, no. 1-2, 11 April 2003 (2003-04-11), pages 381-389, XP004418016 ISSN: 1570-9639 * part "2. Experimental" * * abstract * * page 387, left-hand column, paragraph 3; figure 3A * | 1,2,5,6, 10,13, 16,20, 22,23 | |

TECHNICAL FIELDS SEARCHED (IPC)

G01N

-/--

The present search report has been drawn up for all claims

| Place of search | Date of completion of the search | Examiner |
|---|---|---|
| Munich | 18 July 2006 | Rouault, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 06 00 2491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KITANO H ET AL: "Protein cryocrystallography using laser-processed crystal" JAPANESE JOURNAL OF APPLIED PHYSICS, PART 2 (LETTERS) JAPAN SOC. APPL. PHYS JAPAN, vol. 44, no. 2, 2005, pages L54-L56, XP002390844 ISSN: 0021-4922 * abstract * * page L54, left-hand column, last paragraph * * page L55, left-hand column, paragraph 1 * * figure 1 * ----- | 1-3,10, 13-15, 20-23 | |
| X | TUROWSKA-TYRK I: "Monitoring initial structural changes in a crystal during photo-induced disappearance of its diffracting properties" CHEMICAL PHYSICS ELSEVIER NETHERLANDS, vol. 288, no. 2-3, 15 March 2003 (2003-03-15), pages 241-247, XP002389234 ISSN: 0301-0104 * part "2. Experimental" * * abstract * * page 242, right-hand column, line 1 - line 6 * * page 244, right-hand column, paragraph 1 * ----- -/-- | 1-3,5,6, 10,11, 13, 16-18, 20,22,23 | TECHNICAL FIELDS SEARCHED (IPC) |

The present search report has been drawn up for all claims

| Place of search | Date of completion of the search | Examiner |
|---|---|---|
| Munich | 18 July 2006 | Rouault, P |

**European Patent Office**

# EUROPEAN SEARCH REPORT

Application Number

EP 06 00 2491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TANAKA K ET AL: "Single-Crystal-to-Single-Crystal Enantioselective [2+2] Photodimerization of Coumarin, Thiocoumarin and Cyclohex-2-enone in the Inclusion Complexes with Chiral Host Compounds" TETRAHEDRON, ELSEVIER SCIENCE PUBLISHERS, AMSTERDAM, NL, vol. 56, no. 36, 1 September 2000 (2000-09-01), pages 6853-6865, XP004209427 ISSN: 0040-4020 * page 6857, left-hand column * * figure 5 * ----- | 1,2,5,6, 16,23 | |

TECHNICAL FIELDS SEARCHED (IPC)

The present search report has been drawn up for all claims

| Place of search | Date of completion of the search | Examiner |
|---|---|---|
| Munich | 18 July 2006 | Rouault, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0040952 A

### Non-patent literature cited in the description

- **RAVELLI, R. B. ; LEIROS, H. K. ; PAN, B. ; CAFFREA, M. ; MCSWEENEY, S.** *Structure (Camb),* 2003, vol. 11, 217-224
- **ZWART, P.H. ; BANUMATHI, S. ; DAUTER, M. ; DAUTER, Z.** *Acta Crystallographica Section D,* 2004, vol. 60, 1958-1963
- **RAVELLI, R.B.G. ; NANAO, M. H. ; LOVERING, A. ; WHITE, S. ; MCSWEENEY, S.** *Journal of Synchrotron Radiation,* 2005, vol. 12, 276-284
- **NANAO, M. H. ; SHELDRICK, G. M. ; RAVELLI, R. B.** *Acta Crystallogr D Biol. Crystallogr,* 2005, vol. 61, 1227-1237
- **RAVELLI R. B. ; MCSWEENEY S. M.** *Structure Fold Des,* 2000, vol. 8, 315-318
- **KORT, R. ; PHILLIPS-JONES, NM. ; VAN AALTEN, D.M. ; HAKER, A. ; HOFFER, S. M. ; HELLINGWERF, K.H. ; CRIELAARD, W.** *Biochim Biophys Acta,* 1998, vol. 1385, 1-6
- **KORT, R. ; HELLINGWERF, K. H. ; RAVELLI, R. B.** *J Biol Chem,* 2004, vol. 279, 26417-26424
- **ARZT, S. ; BETEVA, A. ; CIPRIANI, F. ; DELAGENIERE, S. ; FELISAZ, F. ; FORSTNER, G. ; GORDON, E. ; LAUNER, L. ; LAVAULT, B. ; LEONARD, G.** *Prog Biophys Mol Biol,* 2005, vol. 89, 124-152
- **MHAISEKAR et al.** *J. Synchroton Radiat,* vol. 12, 318-328
- **MURRAY, J W. ; GARMAN, E. F. ; RAVELLI, R. B. G.** *Journal of Applied Crystallography,* 2004, vol. 37, 513-522
- **NANAO, M. H. ; SHELDRICK, G. M. ; RAVELLI, R. B.** *Acta Crystallogr D Biol Crystalogr,* 2005, vol. 61, 1227-1237
- **KABSCH, W.** *Journal of Applied Crystallography,* 1988, vol. 21, 916-924
- **SCHNEIDER, T. R. ; SHELDRICK, G. M.** *Acta Crystallogr D Biol Crystallogr,* 2002, vol. 58, 1772-9
- **SHELDRICK, G. M.** *Zeitschrift für Kristallographie,* 2002, vol. 217, 644-650